Europäisches Patentamt

**European Patent Office**

**Office européen des brevets**

(11) Veröffentlichungsnummer: **0 143 910**
**B1**

(12) **EUROPÄISCHE PATENTSCHRIFT**

(45) Veröffentlichungstag der Patentschrift:
**10.08.88**

(51) Int. Cl.⁴: **F 16 K 1/22,** F 16 K 31/163

(21) Anmeldenummer: **84110441.7**

(22) Anmeldetag: **03.09.84**

(54) **Drehklappe mit Servomotor.**

(30) Priorität: **30.09.83 CH 5321/83**

(43) Veröffentlichungstag der Anmeldung:
**12.06.85 Patentblatt 85/24**

(45) Bekanntmachung des Hinweises auf die Patenterteilung:
**10.08.88 Patentblatt 88/32**

(84) Benannte Vertragsstaaten:
**AT BE CH DE FR GB IT LI NL SE**

(56) Entgegenhaltungen:
**FR-A-2 084 339**
**FR-A-2 304 957**
**US-A-3 771 759**
**US-A-4 054 156**
**US-A-4 211 263**

(73) Patentinhaber: **BBC Brown Boveri AG,
Haselstrasse, CH- 5401 Baden (CH)**

(72) Erfinder: **Ramisch, Jan, Feldstrasse 19B, CH- 5442
Fislisbach (CH)**

LIBER, STOCKHOLM 1988

EP 0 143 910 B1

## Beschreibung

Die vorliegende Erfindung betrifft eine Drehklappe gemäß dem Oberbegriff des Patentanspruchs 1.

Drehklappen, wie sie zum Beispiel im Niederdruckbereich von Dampfturbinen zum Einsatz kommen, werden von einem Servomotor betätigt, wobei das Öffnen mit hydraulischer Kraft und das Schliessen mit Federkraft erfolgt. Solch eine Rehklappe ist aus FR-A-2 084 339 bekannt. Eine offene zentrische Drehklappe mit symmetrischem Drehklappenteller ist momentenfrei. Bei schräger Stellung des Drehklappentellers übt das strömende Medium ein Drehmoment aus, das stets schliessend wirkt. Die Schliessfeder hat die Aufgabe, die Drehklappe aus der neutralen Offenstellung in Bewegung zu setzen, d.h. die Masse des Drehklappentellers und aller beweglichen Teile zu beschleunigen. Wird eine kurze Schliesszeit verlangt und sind die Massenträgheitsmomente des Drehklappensystems gross, so kann die Beschleunigungszeit einen ansehnlichen Teil der Gesamtschliesszeit beanspruchen.

Die hydraulische Kraft muss das Strömungsmoment, welches bei einem gewissenen Öffnungsvinkel der Drehklappe ein Maximum aufweist, und die Kraft der Schliessfeder überwinden. Wählt man zur Kürzung der Schliesszeit eine stärkere Feder, so muss die hydraulische Kraft und damit der Servomotor grösser werden.

Hier will die Erfindung Abhilfe schaffen. Der Erfindung, wie sie in dem zweiten Tiel des Anspruchs gekennzeichnet ist, liegt die Aufgabe zugrunde, die Schliesszeit der Drehklappe zu minimieren ohne den Servomotor vergrössern zu müssen. Der Servomotor ist nach dem maximalen Strömungsmoment dimensioniert, das bei einem Öffnungswinkel der Drehklappe, der kleiner als jener der Offenendstellung ist, auftritt. Entsprechend der kinematischen Verhältnisse am Servomotor wirkt die hydraulische Kraft auch bis zur Offenendstellung, wo sie jedoch nicht mehr ganz benötigt wird. Diese überschüssige hydraulische Kraft wird in der Endphase des Öffnungsvorganges bis zur Offenendstellung der Drehklappe gespeichert, um dann in der Anfangsphase des Schliessvorganges zur Beschleunigung der Drehklappenmasse genutzt zu werden. Dadurch wird die Beschleunigungsphase verkürzt und die Schliesszeit minimiert, wobei mit wachsendem Massenträgheitsmoment die schliessverkürzende Wirkung steigt. Bei schweren Drehklappen kann sie ein Drittel der gesamten Schliesszeit betragen.

Die überschüssige hydraulische Servomotorkraft wird in mechanische Energie umgewandelt, wobei sie hierhin in einem Federpaket gespeichert wird, dessen Anordnung gegenüber der Antriebsseite der Drehklappe liegt.

In der Zeichnung ist ein Ausführungsbeispiel der Erfindung 25 schematisch dargestellt. Es zeigt:

Fig. 1    eine komplette Drehklappe in der Offenstellung;

Fig. 2    die Bewegungsübertragung zwischen Servomotor und Drehklappenteller als Schnitt II -II aus Fig. 1;

Fig. 3    die Plazierung des Federspeichers als Ansicht III aus Fig. 1;

Fig. 4    den Aufbau eines Federspeichers;

Fig. 5    den zeitlich erfassten Schliessvorgang einer Drehklappe ohne Federspeicher und

Fig. 6    den zeitlich erfassten Schliessvorgang einer Drehklappe mit Federspeicher.

Alle für das unmittelbare Verständnis der Erfindung nicht erforderlichen Elemente sind fortgelassen. In den verschiedenen Figuren sind jeweils gleiche Elemente mit gleichen Bezugszeichen versehen.

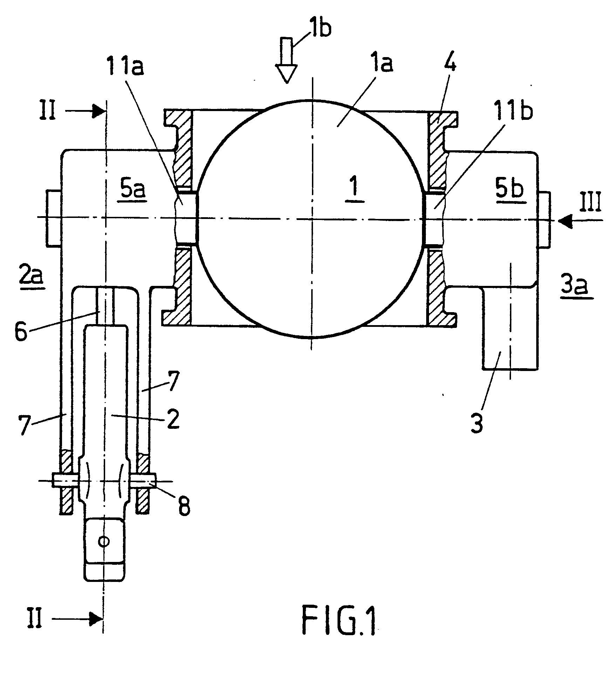

Fig. 1 zeigt die Anordnung einer kompletten Drehklappe 1 in der Offenstellung. Die angesetzten Wellen 11a und 11b des Drehklappentellers 1a sind in einem Drehklappengehäuse 4 gelagert. Fest mit dem Drehklappengehäuse 4 bei der antriebsseitigen Drehklappenlagerung 5a sind die beiden gabelförmigen Arme 7 verbunden, welche der Verankerung 8 des Servomotors 2 dienen. Die teilweise sichtbare Kolbenstange 6 ist mit der Welle 11a verbunden. Gegenüberliegend zur Antriebsseite 2a befindet sich die Federspeicherseite 3a mit dem Federspeicher 3. Der letztgenannte ist ebenfalls mit dem Drehklappengehäuse 4 bei der federspeicherseitigen Drehklappenlagerung 5b fest verbunden.

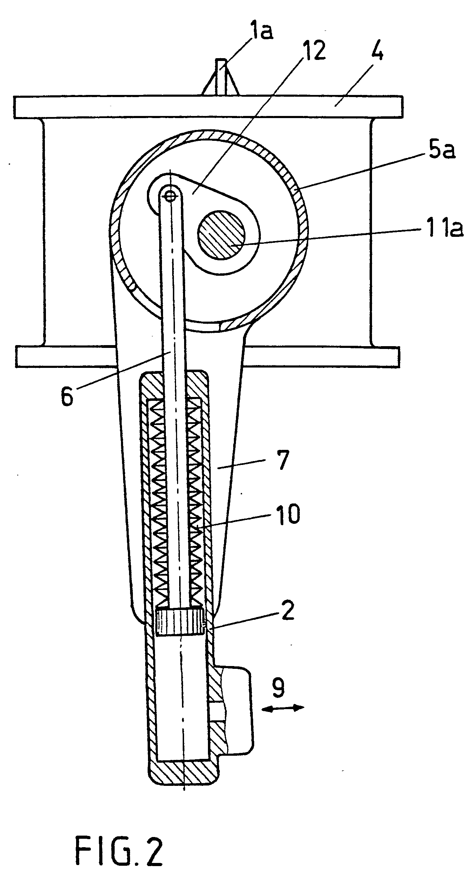

Wie aus Fig. 2 hervorgeht, wird die Bewegungsübertragung 5 zwischen der antriebsseitigen Welle 11a des Drehklappentellers und der Kolbenstange 6 durch die Kurbel 12 erstellt. Die hydraulische Kraft 9 öffnet den Drehklappenteller 1a und spannt zugleich die Tellerfedersäule 10, welche dann für den Schliessvorgang verantwortlich ist.

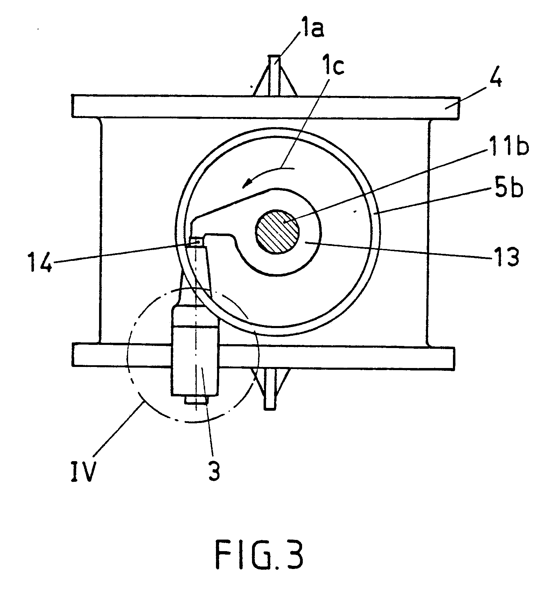

Fig. 3 zeigt die Plazierung des Federspeichers 3 auf der federspeicherseitigen Drehklappenlagerung 5b. Mit der federspeicherseitigen Welle 11b des Drehklappentellers 1a ist die Nockenscheibe 13 fest verbunden, welche in der Offenstellung des Drehklappentellers 1a auf den Federspeicher 3 drückt.

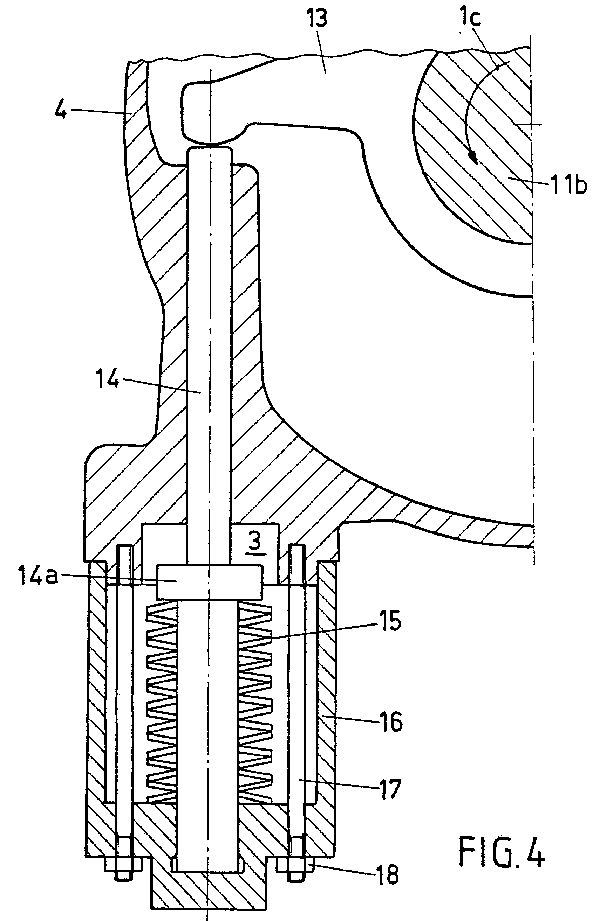

Fig. 4 zeigt den Aufbau des Federspeichers 3. Dieser ist mittels Schrauben 17 und Muttern 18 mit dem Drehklappengehäuse 4 fest verbunden. Zwischen Bund 14a der Stange 14 und Boden der Federspeicherhaube 16 ist die Tellerfedersäule 15 eingebaut, deren Kraft in der Regel um ein Mehrfaches grösser ist als die der Feder 10 des Servomotors 2. In der Endphase des Öffnungsvorganges des Drehklappentellers 1a drückt die mit der Welle 11b fest verbundene Nockenscheibe 13 in Drehrichtung 1c auf die Stange 14 des Federspeichers 3, wodurch die Tellerfedersäule 15 zusammengepresst wird. Diese Federkraft steht dann beim Schliessvorgang zusätzlich zur bereits gespannten Tellerfedersäule 10 des Servomotors 2 zur Verfügung.

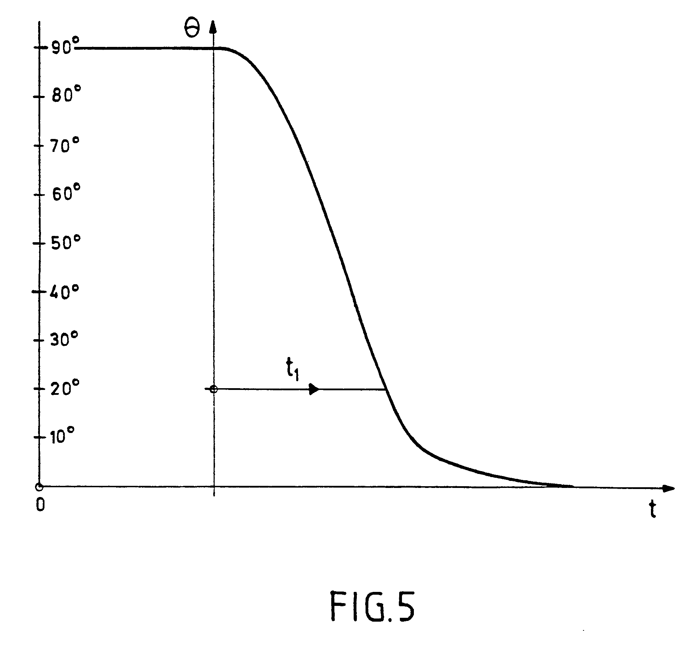

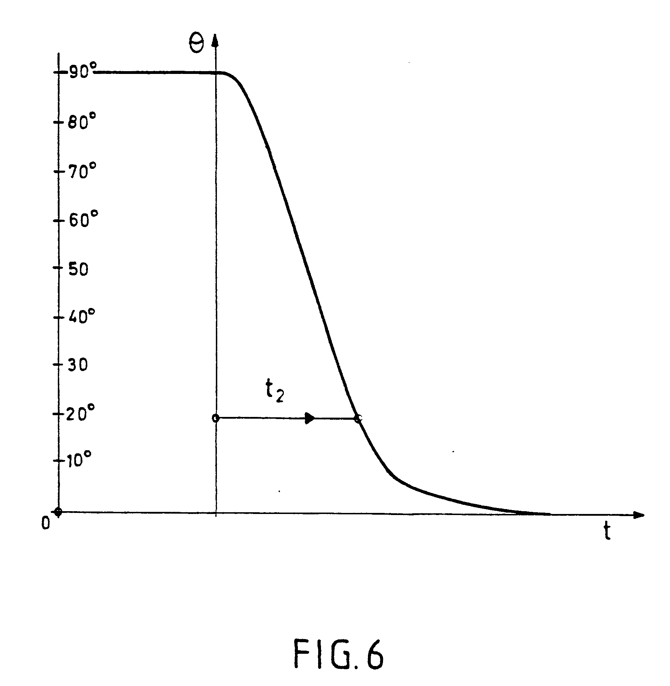

Fig. 5 und Fig. 6 zeigen eine Gegenüberstellung zwischen Schnellschluss ohne Energiespeicher (Fig. 5) und mit Energiespeicher (Fig. 6). Wie ersichtlich ist, ist der Schliesszeitgewinn $t_1$ - $t_2$ - zwischen vollständiger Offenstellung (90°) des Drehklappentellers 1a und Schließstellung bis 20° - bei einer mittelschweren Drehklappe 1 mit Federspeicher 3 bis zu 17 % der Schliesszeit einer gleichen Drehklappe ohne Federspeicher. Bei schweren Drehklappen beträgt der Schliesszeitgewinn gar 33 %.

## Patentanspruch

Zum Schnellschluß im Niederdruckbereich von Dampfkraftanlagen bestimmte, zentrische Drehklappe (1), welche mit hydraulischer Kraft, die bis zur Offenendstellung der Drehklappe wirkt, über einen an einem Ende der Drehklappenwelle (11a) angeordneten Servomotor (2) gegen das Strömungsmoment und die Kraft einer vom Servomotor gespannten Schließfeder (10) geöffnet wird und mittels der Schließfeder (10) aus der Offenendstellung in die Schließstellung beschleunigt wird, dadurch gekennzeichnet, daß am anderen Ende der Drehklappenwelle (11b) eine Nockenscheibe (13) fest angeordnet ist, welche in Öffnungsdrehrichtung der Klappe und in der Endphase dessen Öffnungsvorganges ein zweites Federpaket (15) zusammenpreßt.

## Claim

Central Butterfly valve (1), intended for rapid closure in the low-pressure region of steam power plants which is opened by means of hydraulic force which acts up to the open end position of the butterfly valve, via a servomotor (2) arranged at one end of the butterfly valve shaft (11a), against the torque due to the flow and the force of a closing spring (10), tensioned by the servomotor, and is accelerated out of the open end position into the closed position, characterized in that, at the other end of the butterfly valve shaft (11b), there is solidly arranged a cam disc (13), which, in opening direction of rotation of the valve and in the end phase of its opening procedure, compresses a second spring assembly (15).

## Revendication

Clapet rotatif (1) central à fermeture rapide pour la partie à basse pression de centrales à vapeur, qui est ouvert par une force hydraulique, agissant jusqu'à la position finale d'ouverture du clapet rotatif, au moyen d'un servo-moteur (2) disposé à une extrémité de l'axe (11a) du clapet rotatif, contre le moment dû à l'écoulement et contre la force d'un ressort de fermeture (10) comprimé par le servo-moteur, et qui est accéléré par le ressort de fermeture (10) depuis la position finale d'ouverture jusqu'à la position de fermeture, caractérisé en ce qu'à l'autre extrémité de l'axe (11b) du clapet rotatif, est calée une came (13) qui comprime un second paquet de ressorts (15) dans le sens de rotation de l'ouverture du clapet et dans la phase finale du processus d'ouverture de ce dernier.

FIG.1

FIG.2

FIG.3

FIG. 4

FIG.5

FIG. 6